(19) **Europäisches Patentamt / European Patent Office / Office européen des brevets**

(11) **EP 1 647 677 B1**

(12) **EUROPÄISCHE PATENTSCHRIFT**

(45) Veröffentlichungstag und Bekanntmachung des Hinweises auf die Patenterteilung:
**20.02.2013 Patentblatt 2013/08**

(51) Int Cl.:
*F01K 13/00* *(2006.01)* *G05B 17/02* *(2006.01)*

(21) Anmeldenummer: **05022172.0**

(22) Anmeldetag: **11.10.2005**

(54) **Verfahren zur Simulation des Betriebsverhaltens einer Dampfturbinenanlage**

Method for simulating the operating characteristics of a steam turbine plant

Méthode pour simuler les caractéristiques de fonctionnement d'une installation de turbine à vapeur

(84) Benannte Vertragsstaaten:
**CH DE GB IT LI**

(30) Priorität: **12.10.2004 EP 04024323**

(43) Veröffentlichungstag der Anmeldung:
**19.04.2006 Patentblatt 2006/16**

(73) Patentinhaber: **SIEMENS AKTIENGESELLSCHAFT 80333 München (DE)**

(72) Erfinder:
• **Rothe, Klaus**
 **46459 Rees (DE)**
• **Zimmer, Gerta, Dr.**
 **45468 Mülheim an der Ruhr (DE)**

(56) Entgegenhaltungen:
EP-A- 0 100 532  EP-A- 0 684 366
DE-A1- 19 904 974  US-A- 5 347 466
US-A- 5 999 894  US-A1- 2003 097 194
US-A1- 2004 073 409

• NIU Z ET AL: "Adaptive simulation of boiler unit performance" ENERGY CONVERSION AND MANAGEMENT, ELSEVIER SCIENCE PUBLISHERS, OXFORD, GB, Bd. 39, Nr. 13, 1. September 1998 (1998-09-01), Seiten 1383-1394, XP004123264 ISSN: 0196-8904
• SCHAEFER J ET AL: "MATHEMATISCHE MODELLIERUNG EINES DAMPFERZEUGERS MIT ZIRKULIERENDER WIRBELSCHICHT UNTER DER ZIELSETZUNG EINER ECHTZEITSIMULATION" VGB KRAFTWERKSTECHNIK, VGB KRAFTWERKSTECHNIK GMBH. ESSEN, DE, Bd. 79, Nr. 8, 1999, Seiten 48-53, XP000847463 ISSN: 0372-5715

EP 1 647 677 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**EP 1 647 677 B1**

## Beschreibung

Die Erfindung bezieht sich auf ein Verfahren zur Simulation des Betriebsverhaltens einer Dampfturbinenanlage.

Ein solches Verfahren ist z.B. in US 2004/073409 A1 offenbart. Ein derartiges Simulationsverfahren wird häufig im Zuge der Konzeption einer Dampfturbinenanlage herangezogen, um bereits vor der Konstruktion der realen, physikalischen Anlagenbestandteile das Betriebsverhalten der zu konstruierenden Anlage abschätzen zu können. Die Simulation dient hierbei insbesondere für eine verbesserte Auslegung bzw. Optimierung der Anlage oder einzelner Anlagebestandteile, zur Früherkennung etwaiger Konzeptionsfehler, etc.

Ein derartiges Simulationsverfahren wird des Weiteren eingesetzt, um gefahrlos das Betriebsverhalten einer Dampfturbinenanlage in einem außergewöhnlichen Betriebszustand, insbesondere beim schnellen Anfahren der Anlage oder bei Störfällen, zu testen.

Bisher wird die dynamische Simulation einer Dampfturbinenanlage meistens durch Abbildung der zu simulierenden Anlage auf eine Anzahl von hydrodynamischen Speicher-Drossel-Elementen durchgeführt. Eine hinreichend präzise Modellierung des Massenstroms und des Druckverlaufs innerhalb der Anlage ist bei Anwendung eines solchen Modells in der Regel jedoch nur in der Nähe des untersuchten Arbeitspunktes möglich. Dagegen wird die reale Anlage umso unpräziser abgebildet, je weiter der Betriebszustand von dem untersuchten Arbeitspunkt entfernt ist. Der Temperaturverlauf innerhalb der Anlage lässt sich mit diesem Ansatz nicht nachbilden, ebenso wenig das Verhalten der Anlage bei einem Phasenübergang des Arbeitsfluids.

Der Erfindung liegt die Aufgabe zu Grunde, ein unter den vorstehend genannten Aspekten verbessertes Verfahren zur Simulation des Betriebsverhaltens einer Dampfturbinenanlage anzugeben.

Diese Aufgabe wird erfindungsgemäß gelöst durch die Merkmale des Anspruchs 1. Danach wird eine reale (bereits bestehende oder geplante) Dampfturbinenanlage, nachfolgend kurz als Anlage bezeichnet, zunächst durch ein Simulationsmodell abgebildet. Hierzu wird die Anlage in eine Anzahl von Anlagenelemente gegliedert, die jeweils eine funktionale Einheit entlang eines Fluidpfades der Anlage darstellen. Insbesondere wird jede Rohrleitung, jedes Ventil und jeder Turbinenabschnitt der zu simulierenden Anlage als separates Anlagenelement definiert. Weiterhin werden der Anlage ein oder mehrere Referenzvolumina zugeordnet, so dass zwei aneinander angrenzenden Anlagenelementen mindestens ein Referenzvolumen zwischengeordnet ist.

Jedem Referenzvolumen der realen Dampfturbinenanlage wird nun ein Speicherelement des Simulationsmodells zugeordnet, für das zu jedem Simulationszeitpunkt ein Masseninhalt, ein Energieinhalt sowie ein definierter thermodynamischer Zustand berechnet werden kann. Ebenso wird jedem Anlagenelement der realen Dampfturbinenanlage seitens des Simulationsmodells eine für das Anlagenelement spezifische Durchflussfunktion zugeordnet, die in Abhängigkeit (thermodynamischer) Eingangszustände einen Massenstrom und Enthalpiewerte an den Rändern des Anlagenelements, insbesondere eine ggf. durch das Anlagenelement verursachte Enthalpieänderung berechnet.

Der (thermodynamische) Zustand eines Speicherelements wird dabei definiert durch ein vorgegebenes Set thermodynamischer Größen, z.B. Druck, Temperatur, Dichte, etc. Der Zustand definiert zeitabhängig den Wert dieser Größen für das zugeordnete Speicherelement.

Im Zuge einer Simulationsphase ist nun verfahrensgemäß vorgesehen, für jedes Speicherelement ausgehend von vorgegebenen Anfangsbedingungen anhand der Durchflussfunktionen insbesondere iterativ die Masse und den Energieinhalt eines jeden Speicherelements zu berechnen und hieraus einen dem Speicherelement zugeordneten Ausgabezustand abzuleiten.

Die einem Speicherelement zugeordnete absolute innere Energie ist gemäß der physikalischen Definition dieses Begriffs als Summe der thermischen Energie der in dem Speicherelement enthaltenen Masse gegeben. Anstelle des Absolutbetrages der inneren Energie kann äquivalenterweise die spezifische innere Energie, d.h. die innere Energie pro Masseneinheit, ferner ggf. auch die innere Energie pro Mol, etc., herangezogen werden.

Als definierende Größen für den Zustand eines Speicherelements sind in einer Variante der Erfindung die Größen Druck, Enthalpie und spezifisches Volumen vorgesehen. Als äquivalent zu der Angabe des spezifischen Volumens wird die Angabe der Dichte verstanden, die sich aus dem Kehrwert des spezifischen Volumens ergibt. Es sei hierbei angemerkt, dass an sich durch ein vorgegebenes Wertepaar für zwei dieser Größen ein thermodynamischer Zustand im strengen physikalischen Sinn bereits eindeutig definiert ist, dass also der Wert der jeweils dritten oder jeder weiteren Größe durch ein solches Wertepaar festgelegt ist. Die anmeldungsgemäß redundante Definition eines thermodynamischen Zustands durch Druck, Enthalpie und spezifisches Volumen erfolgt insbesondere zur Reduzierung des mit der Simulation verbundenen Rechenaufwands. Indem der Druck stets wiederum in Abhängigkeit von Enthalpie und spezifischem Volumen bestimmt wird, wird sichergestellt, dass nur physikalisch sinnvolle Zustände berücksichtigt werden.

In einer weiteren Variante der Erfindung wird als zusätzliche definierende Größe für den Zustand eines Speicherelements neben Druck, Enthalpie und spezifischem Volumen (bzw. Dichte) die Temperatur des Speicherelements angegeben. Die explizite Angabe der Temperatur als zusätzliche (und wiederum redundante) Zustandsgröße hat insbesondere den Vorteil, dass hierdurch ein Energiefluss durch Temperaturausgleich zwischen Speicherelementen oder ein Energieverlust besonders einfach berücksichtigbar ist. So ist in einer bevorzugten Ausführung des Verfahrens vorgesehen, dass für mindestens ein Anlagenelement zusätzlich ein Wärmefluss berechnet wird, der von der Temperaturdifferenz der angrenzenden Speicherelemente abhängt. In einer weiteren bevorzugten Ausgestaltung des Verfahrens wird zusätzlich oder alternativ anhand der Temperatur mindestens eines Speicherelements ein diesem zugeordneter Wärmeverlustbetrag berechnet, der einen Wärmefluss aus einem Speicherelement an die Umgebung der Dampfturbinenanlage, insbesondere durch Wärmeabstrahlung, wiedergibt.

In einer vorteilhaften Weiterentwicklung der Erfindung ist als zusätzliches Anlagenelement mindestens ein Entwässerungselement vorgesehen, mittels welchem eine Entwässerung des Förderfluids, d.h. die Trennung des Förderfluids in Wasser und "trockeneren" Dampf berechnet wird. Das Entwässerungselement ist hierbei zweckmäßigerweise (unter Zwischenschaltung eines Speicherelements) einem Turbinenabschnitt nachgeordnet.

Korrespondierend mit dem Entwässerungselement ist weiterhin vorteilhafterweise ein Wasserspeicherelement vorgesehen.

In einer weiteren vorteilhaften Ausführung der Erfindung ist zusätzlich ein Turbinenwellenmodul vorgesehen, welches anhand einer von dem oder jedem Turbinenabschnitt "erzeugten" Turbinenleistung eine Drehzahl einer Turbinenwelle berechnet. Diese Drehzahl wird zweckmäßigerweise an den oder jeden Turbinenabschnitt als Eingangsgröße zurückgegeben und von diesem zur Berechnung der so genannten Ventilationsleistung berücksichtigt. Als Ventilationsleistung wird die Leistung bezeichnet, die durch die Drehung der Turbinenwelle über die Turbinenschaufeln als Wärme an das Arbeitsmedium (d.h. das Fördergas) in einem Turbinenabschnitt abgegeben wird, in dem der Massenfluss vollständig oder beinahe zum Erliegen gekommen ist.

Durch das Turbinenwellenelement wird bevorzugt nicht lediglich der aktuelle Wert der Turbinenleistung, sondern vielmehr auch - z.B. durch geeignete Integration über die Turbinenleistung - deren zeitlicher Verlauf berücksichtigt. Anhand des zeitlichen Verlaufs der Turbinenleistung wird anhand einer vorgegebenen Trägheit der Turbinenwelle die zeitliche Änderung der Drehzahl berechnet.

Zur Berechnung des einem thermodynamischen Zustand zugeordneten Drucks sowie gegebenenfalls weiterer thermodynamischer Zustandsgrößen wird bevorzugt eine Wasserdampftafel, insbesondere nach dem Industriestandard IAPWS-IF97, herangezogen. Der Begriff Wasserdampftafel bezeichnet ein Kennlinienwerk, in welchem für Wasserdampf die gegenseitige Abhängigkeit thermodynamischer Zustandsgrößen, insbesondere Druck p, Temperatur T, spezifisches Volumen v (bzw. Dichte p), Isentropenexponent $\kappa$ und Enthalpie h, für eine Vielzahl von Zuständen aufgelistet ist. Die Verwendung der Wasserdampftafel im Zuge des Simulationsverfahrens hat insbesondere den Vorteil, dass bei Kenntnis der verfahrensgemäß berechneten inneren Energie und des Masseninhalts eines Speicherelements alle weiteren Zustandsgrößen wie z.B. Druck, Temperatur, Isentropenexponent, etc. direkt berechnet werden können.

Um insbesondere auch komplexere Betriebsabläufe realitätsnah simulieren zu können, umfasst die Simulationsphase bevorzugt mehrere iterativ nacheinander ausgeführte Simulationsschritte, wobei im Zuge eines jeden Simulationsschrittes für jedes Speicherelement ein Ausgabezustand berechnet wird, der wiederum als Anfangsbedingung eines nachfolgend ausgeführten Iterationsschrittes herangezogen wird.

Weitere Ausbildungen und Vorteile der Erfindung ergeben sich aus dem nachfolgenden Beschreibungsteil, in welchem ein Ausführungsbeispiel der Erfindung anhand einer Zeichnung näher erläutert ist. Darin zeigen:

FIG 1    in schematischer Darstellung eine zu simulierende Dampfturbinenanlage mit einem Ventil, einem Turbinenabschnitt und einer Rohrleitung als hintereinander geschaltete Anlagenelemente sowie zwei den Anlagenelementen jeweils zwischengeschalteten Referenzvolumina,

FIG 2    in einem Blockschaltbild ein der Dampfturbinenanlage gemäß FIG 1 entsprechendes Simulationsmodell mit zwei jeweils einem Referenzvolumen entsprechenden Speicherelementen sowie jeweils einer dem Ventil, dem Turbinenabschnitt bzw. der Rohrleitung entsprechenden Durchflussfunktion,

FIG 3    in einem Blockschaltbild die Struktur eines Speicherelements gemäß FIG 2,

FIG 4    in einem Blockschaltbild die der Rohrleitung gemäß FIG 1 entsprechende dritte Durchflussfunktion gemäß FIG 2,

FIG 5    in einem Blockschaltbild die dem Turbinenabschnitt gemäß FIG 1 entsprechende zweite Durchflussfunktion gemäß FIG 2 und

FIG 6    in einem Blockschaltbild die dem Ventil gemäß FIG 1 entsprechende erste Durchflussfunktion gemäß FIG 2,

FIG 7    in Darstellung gemäß FIG 2 ein modifiziertes Simulationsmodell zur Simulation einer Dampfturbinenanlage mit zwei Turbinenabschnitten und einen dazwischen angeordneten Wasserabscheider mit beigeordnetem Wasserspeicher sowie jeweils einem jeden Turbinenabschnitt vorgeschalteten Ventil oder Rohrabschnitt,

FIG 8    in Darstellung gemäß FIG 3 die Struktur eines Speicherelements des Simulationsmodells gemäß FIG 7,

FIG 9    in Darstellung gemäß FIG 3 die einer Rohrleitung entsprechende Durchflussfunktion des Simulationsmodells gemäß FIG 7,

FIG 10    in Darstellung gemäß FIG 3 die einem Turbinenabschnitt entsprechende Durchflussfunktion des Simulationsmodells gemäß FIG 7,

FIG 11    in Darstellung gemäß FIG 3 die dem Wasserabscheider entsprechende Durchflussfunktion des Simulationsmodells gemäß FIG 7,

FIG 12    in Darstellung gemäß FIG 3 die Struktur eines den Wasserspeicher simulierenden Wasserspeicherelements des Simulationsmodells gemäß FIG 7, und

FIG 13    in Darstellung gemäß FIG 3 ein mit dem Wasserspeicherelement kommunizierendes Füllstandmodul zur Regulierung des Wasserniveaus im Wasserspeicher.

Einander entsprechende Teile und Größen sind in allen Figuren stets mit den gleichen Bezugzeichen versehen. Nachfolgend verwendete mathematische Funktionen und in den Figuren verwendete Symbole sind in TAB 1 und 2 näher erläutert.

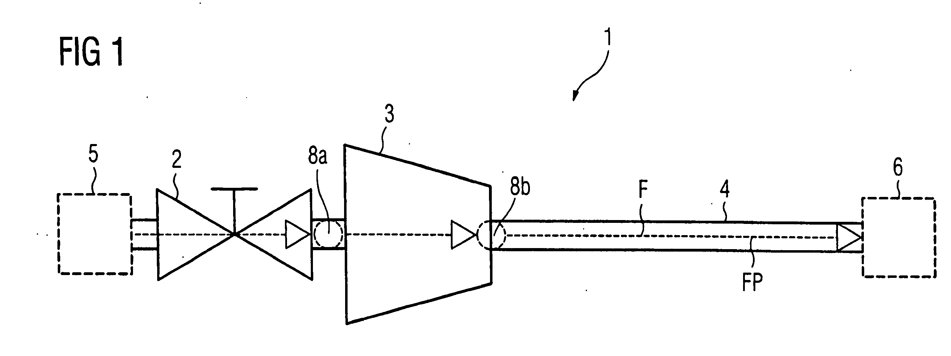

FIG 1 zeigt in grober schematischer Vereinfachung eine zu simulierende Dampfturbinenanlage 1 (nachfolgend kurz als Anlage 1 bezeichnet). Die Anlage 1 umfasst ein Ventil 2, einen Turbinenabschnitt 3 sowie eine Rohrleitung 4, die in Serie fluidisch miteinander verbunden sind und somit einen Fluidpfad FP für ein Arbeitsfluid F, insbesondere Heißdampf, bilden. Die Anlage 1 umfasst weiterhin einen dem Ventil 2 vorgeschalteten Dampferzeuger 5 sowie einen der Rohrleitung 4 nachgeschalteten Kondensator 6.

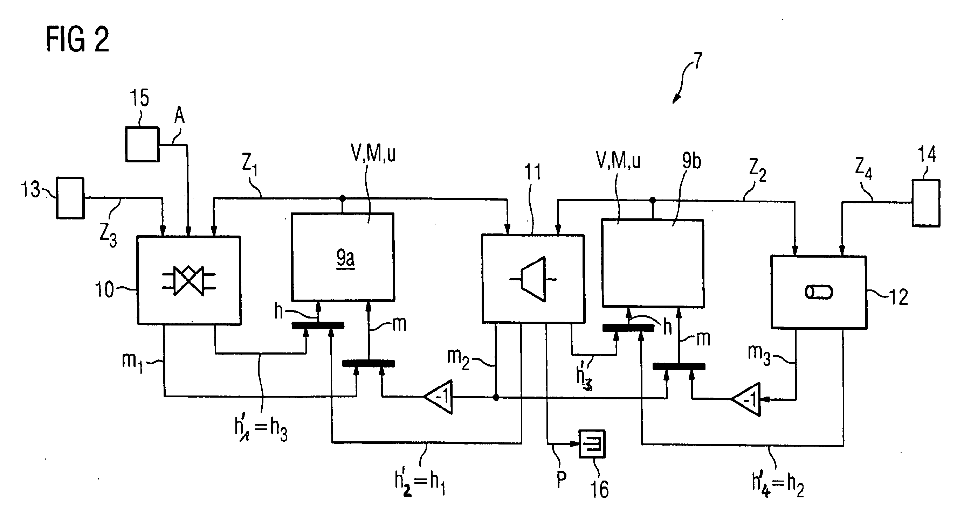

Zur Simulation des Betriebsverhaltens der Anlage 1 wird diese zunächst auf ein in FIG 2 dargestelltes Simulationsmodell 7 abgebildet. Zur Erstellung des Simulationsmodells 7 wird die reale Anlage 1 zunächst gegliedert in funktionale Anlagenelemente, die auf jeweils einen entsprechenden Modellbestandteil des Simulationsmodells 7 abgebildet werden sollen. Im Beispiel gemäß FIG 1 bilden das Ventil 2, der Turbinenabschnitt 3 und die Rohrleitung 4 jeweils ein solches Anlagenelement. Um das Betriebsverhalten der Anlage 1 im Zuge der Simulation ortsaufgelöst bestimmen zu können, wird die Anlage 1 weiterhin in eine Anzahl von Referenzvolumina 8a und 8b gegliedert, wobei jeweils ein Referenzvolumen 8a bzw. 8b zwei aneinander angrenzenden Anlagenelementen 2,3,4 zwischengeordnet ist. So ist das Referenzvolumen 8a dem Ventil 2 und dem Turbinenabschnitt 3, und das Referenzvolumen 8b dem Turbinenabschnitt 3 und der Rohrleitung 4 zwischengeordnet.

Im Gegensatz zu dem vereinfachten Beispiel gemäß FIG 1, bei welchem der Fluidpfad FP durch Hintereinanderschaltung der Anlagenelemente 2,3,4 linear ausgebildet ist, ist bei einer realen Dampfturbinenanlage der Fluidpfad FP in der Regel netzartig verzweigt. In Abbildung einer solchen komplexen Dampfturbinenanlage auf ein entsprechendes Simulationsmodell sind die Referenzvolumina insbesondere in den Knotenpunkten des Fluidpfades FP anzuordnen, während die ausgewählten Anlagenelemente jeweils eine Verbindung zwischen zwei solchen Knotenpunkten darstellen.

Jedes Referenzvolumen 8a,8b ist derart ausgewählt, dass im Betrieb der Anlage 1 innerhalb des Referenzvolumens 8a, 8b zu jedem Zeitpunkt ein im Rahmen der angestrebten Genauigkeit eindeutiger thermodynamischer Zustand vorliegt, der insbesondere durch wohlbestimmte thermodynamische Zustandsgrößen wie Temperatur, Druck, etc. charakterisiert ist.

In Abbildung der Anlage 1 auf das Simulationsmodell 7 wird jedem Referenzvolumen 8a, 8b der Anlage 1 ein Speicherelement 9a bzw. 9b zugeordnet. Jedes Speicherelement 9a, 9b ist ein Softwaremodul, dem eine Anzahl von Variablen und Konstanten als "Eigenschaften" zugeordnet ist. Diese "Eigenschaften" umfassen insbesondere ein konstantes virtuelles Volumen V, dessen Wert in Entsprechung mit dem zugeordneten Referenzvolumen 8a bzw. 8b gewählt ist. Des Weiteren sind jedem Speicherelement 9a, 9b ein Masseninhalt M und spezifische innere Energie u ($u = U/M$) als Variablen zugeordnet. Jedem Speicherelement 9a, 9b ist weiterhin ein virtueller thermodynamischer Zustand zugeordnet, der in Form eines Datenvektors $Z_i = \{p_i,v_i,h_i\}$ (nachfolgend als Zustandsvektor $Z_i$ oder kurz Zustand bezeichnet) definiert ist. Der Zustandsvektor $Z_i$ umfasst als Komponenten den Druck $p_i$, das spezifische Volumen $v_i$ und die spezifische Enthalpie $h_i$ des entsprechenden Speicherelements 9a bzw. 9b. Der Zählindex $i=1,2$ bezeichnet hierbei die Zuordnung des Zustands $Z_i$ und seiner Komponenten $p_i$, $v_i$ und $h_i$ zu dem jeweiligen Speicherelement 9a bzw. 9b, wobei mit $i=1$ bezeichnete Größen dem Speicherelement 9a und mit $i=2$ bezeichnete Größen dem Speicherelement 9b zugeordnet sind.

Jedem Anlagenelement 2,3,4 ist seitens des Simulationsmodells 7 eine zugehörige und für das jeweilige Anlagenelement 2,3 bzw. 4 spezifische Durchflussfunktion zugeordnet, die durch ein entsprechendes, nachfolgend als Durchflussmodul 10,11,12 bezeichnetes Softwaremodul implementiert ist. Jedes Durchflussmodul 10,11,12 berechnet in Abhängigkeit der thermodynamischen Zustände an den Moduleingängen einen für das jeweilige Durchflussmodul 10,11,12 charakteristischen Massenstrom $m_i$ ($i=1,2,3$) sowie gegebenenfalls eine durch das simulierte Anlagenelement 2,3,4 verursachte Enthalpieänderung. Wird durch das simulierte Anlagenelement keine nennenswerte Änderung der Totalenthalpie verursacht, wie dies aufgrund der adiabatischen Zustandsänderungen im vorliegenden Beispiel für das Ventil 2 und die Rohrleitung 4 der Fall ist, so gibt das zugeordnete Durchflussmodul 10 bzw. 12 zusammen mit dem berechneten Massenstrom $m_i$ (mit $i=1$ für das Durchflussmodul 10, und $i=3$ für das Durchflussmodul 12) die dement-sprechend konstante Enthalpie $h'_i$ (mit $i=1$ für für das Durchflussmodul 10, und $i=4$ für das Durchflussmodul 12) an das jeweils benachbarte Speicherelement 9a bzw. 9b ab. Im Gegensatz dazu wird durch das Durchflussmodul 11 die durch den Turbinenabschnitt 3 verursachte Enthalpieänderung berücksichtigt. Das Durchflussmodul 11 gibt deshalb neben dem berechneten Massenstrom $m_2$ die am Turbineneingang vorliegende Enthalpie $h'_2$ an das vorgeschaltete Speicher-

element 9a, und die am Turbinenausgang vorliegende Enthalpie h'$_3$ an das nachgeschaltete Speicherelement 9b aus. Die Durchflussmodule 10, 11, und 12 sind in der Regel nicht für eine feste Durchflussrichtung ausgelegt. Vielmehr wird die Flussrichtung anhand des Druckgefälles an den Moduleingängen flexibel bestimmt.

Jedes Speicherelement 9a, 9b gibt den zugehörigen Zustandsvektor $Z_1$, $Z_2$ als Eingangszustand an die benachbarten Durchflussmodule 10 und 11 bzw. 11 und 12 ab. Das Durchflussmodul 11 erhält also beispielsweise den Zustandsvektor $Z_1$ des vorgeschalteten Speicherelements 9a und den Zustandsvektor $Z_2$ des nachgeschalteten Speicherelements 9b als Eingangszustände.

Um für die Simulation definierte Randbedingungen zu schaffen, wird dem ersten Durchflussmodul 10 durch ein Initialmodul 13, das die modellhafte Abbildung des Dampferzeugers 5 darstellt, ein vorgegebener Zustandsvektor $Z_3=\{p_3,v_3,h_3\}$ als Eingangszustand zugeführt. Entsprechend ist dem letzten Durchflussmodul 12 durch ein Endmodul 14, das den Kondensator 6 abbildet, ein Zustandsvektor $Z_4=\{p_4,v_4,h_4\}$ zugeführt. Die Zustandsvektoren $Z_3$ und $Z_4$ sind nachfolgend auch als Randzustände bezeichnet. Bei der nach FIG 1 von dem Dampferzeuger 5 in Richtung auf den Kondensator 6 gerichteten Strömungsrichtung des Arbeitsfluids F gelten für die Werte der Enthalpien h'$_i$ bzw. h$_i$ die Gleichungen h'$_1$ = h$_3$, h'$_2$ = h$_1$ und h'$_4$ = h$_2$.

Weiterhin wird dem ersten Durchflussmodul 10 durch ein Steuermodul 15 eine Steuergröße A (in der Dimension einer Fläche) zugeführt, durch welche ein variabler Öffnungsgrad des simulierten Ventils 2 vorgegeben ist. Das Durchflussmodul 11 gibt weiterhin ein der Turbinenleistung P entsprechendes Ausgabesignal an ein Ausgabemodul 16 (oder Terminal) ab, über welches die Turbinenleistung zu Kontrollzwecken angezeigt und/oder aufgezeichnet wird.

Zu Beginn einer Simulationsphase wird jedem Speicherelement 9a, 9b sowie dem Initialmodul 13 und Endmodul 14 vorgegebene Zustände $Z_1$ bis $Z_4$ als Anfangsbedingungen vorgegeben. In einem ersten Simulationsschritt wird nun durch jedes Durchflussmodul 10,11,12 der entsprechende Massenstrom m$_i$ und die entsprechende Enthalpie h'$_i$ (i=1-4) berechnet und dem bzw. den benachbarten Speicherelementen 9a und/oder 9b zugeführt. Für jedes Speicherelement 9a, 9b wird hierauf in nachfolgend näher beschriebener Weise ein aktualisierter Zustand $Z_1$ bzw. $Z_2$ als jeweiliger Ausgabezustand berechnet und den benachbarten Durchflussmodulen 10,11 bzw. 12 wiederum zur Verfügung gestellt.

In einem nachfolgenden Simulationsschritt wird der vorstehend beschriebene Vorgang wiederholt, indem die vorher berechneten Ausgabezustände $Z_1$, $Z_2$ wiederum als Anfangsbedingungen des weiteren Simulationsschritts herangezogen werden. Dieser Prozess wird über eine vorgegebene Anzahl von Simulationsschritten iterativ bis zum Ende der Simulationsphase wiederholt. Die vorgegebenen Randzustände $Z_3$ bzw. $Z_4$ können wahlweise, je nach der beabsichtigten Simulationssituation, während der gesamten Simulationsphase konstant gehalten oder im Verlauf der aufeinander folgenden Simulationsschritte variiert werden. Die Simulationsbedingungen können weiterhin durch Variation der Steuergröße A beeinflusst werden. Aus Gründen der physikalischen Konsistenz werden nur physikalisch sinnvolle Randzustände $Z_3$ und $Z_4$ vorgegeben. Ebenso erfolgt eine Variation der Randzustände $Z_3$ und $Z_4$ sowie der Steuergröße A nur zeitkontinuierlich, d.h. stetig mit der Simulationszeit.

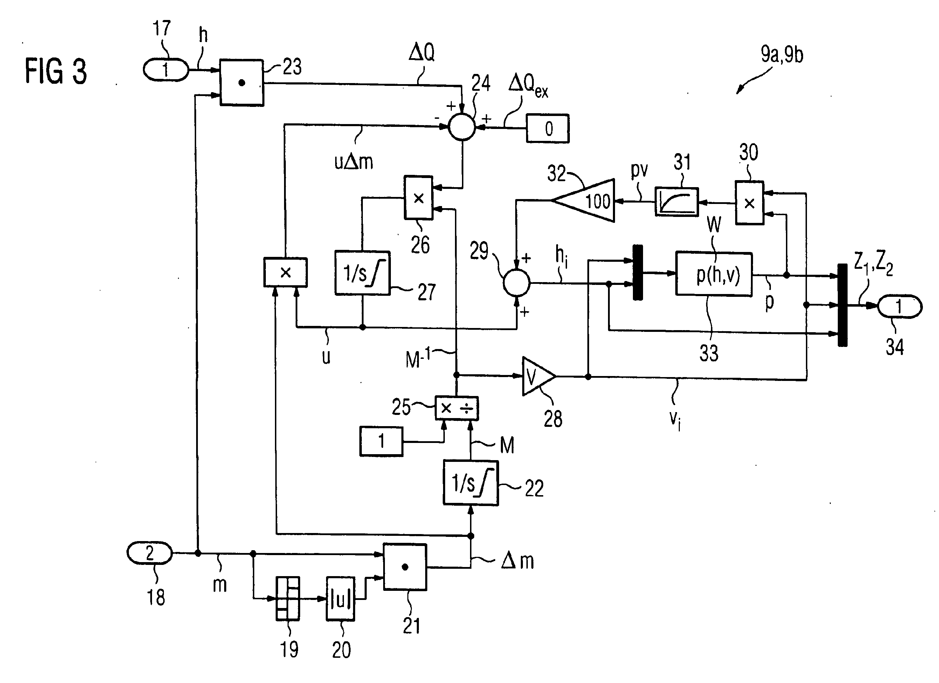

Die Struktur und Funktionsweise eines jeden der beiden Speicherelemente 9a und 9b ist in FIG 3 in einem Blockschaltbild näher dargestellt. Jedes Speicherelement 9a, 9b weist, wie auch schon aus FIG 2 ersichtlich, zwei Dateneingänge 17 und 18 auf. Über den ersten Dateneingang 17 wird dem Speicherelement 9a, 9b ein Vektor h (nachfolgend als Enthalpievektor h bezeichnet) zugeführt, der als Komponenten die von den benachbarten Durchflussmodulen 10,11 bzw. 12 jeweils ausgegebenen Enthalpien h'$_i$ (i=1-4) enthält. Für das Speicherelement 9a gilt gemäß FIG 2 somit h=\{h'$_1$,h'$_2$\}, für das Speicherelement 9b entsprechend h=\{h'$_3$,h'$_4$\}.

Über den Dateneingang 18 wird dem jeweiligen Speicherelement 9a, 9b ein Vektor m (nachfolgend als Massenvektor m bezeichnet) zugeführt, der die von den benachbarten Modulen 10,11,12 jeweils berechneten Massenströme m$_i$ enthält. Für das Speicherelement 9a gilt hier m=\{m$_1$, -m$_2$\}, für das Speicherelement 9b gilt entsprechend m=\{m$_2$, -m$_3$\}.

Innerhalb eines jeden Speicherelements 9a, 9b wird zunächst durch Module 19,20 und 21 die Nettomassenänderung $\Delta$m während des aktuellen Simulationsschritts bestimmt, indem die Komponenten des Massenvektors m aufsummiert werden. Technisch ist dies realisiert durch Skalarmultiplikation (Modul 21) des Massenvektors m mit einem Einheitsvektor, der eine der Anzahl der Komponenten des Massenvektors m entsprechende Zahl von Komponenten des Werts 1 enthält. Der Einheitsvektor wird erzeugt durch komponentenweise Anwendung einer Signum-Funktion (Modul 19) auf den Massenvektor m und anschließende komponentenweise Absolutwertbildung (Modul 20). Durch diesen numerischen Trick ist das Speicherelement 9a, 9b zur Aufnahme einer variablen Anzahl von Massenströmen m$_1$, d.h. zur Verarbeitung von Massenvektoren mit beliebiger Komponentenanzahl verallgemeinert.

Die aus dem Modul 21 resultierende Nettomassenänderung $\Delta$m wird einem Integrator 22 zugeführt, der den hinterlegten bisherigen Masseninhalt M durch Addition mit der Nettomassenänderung $\Delta$m aktualisiert. Die durch die Module 19 bis 22 durchgeführte Massenanpassung ist somit äquivalent mit der Formel

$$m \circ \vec{1} = \sum_{j \in J} m_j \cdot \underbrace{\left| sign(m_j) \right|}_{=1!} + M \rightarrow M \qquad \qquad \text{GLG 1}$$

wobei der Pfeiloperator "->" für eine Wertzuweisung an die Variable M steht. Für das Speicherelement 9a ist J={1,2}, für das Speicherelement 9b ist J={2,3}. Der Summenterm in GLG 1 entspricht einer einfachen Summe der einzelnen Massenströme $m_j$.

Aus dem Enthalpievektor h und dem Massenvektor m wird andererseits durch Skalarmultiplikation (Modul 23) die dem Speicherelement 9a, 9b während des aktuellen Simulationsschrittes zu- bzw. abgeführte Nettowärme $\Delta Q$ berechnet. Diese wird addiert (Modul 24) mit einem zusätzlichen Wärmestrom $\Delta Q_{ex}$, durch welchen ein Wärmeverlust oder -gewinn durch Abstrahlung oder dgl. berücksichtigt wird. Die Addition umfasst einen weiteren Term $u\Delta m$, durch welchen der Einfluss der Nettomassenänderung $\Delta m$ auf die Änderung der spezifischen inneren Energie u berücksichtigt wird. Das Ergebnis wird mit dem invertierten Masseninhalt $M^{-1}$ multipliziert (Modul 26) und einem zweiten Integrator 27 zugeführt, der die spezifische innere Energie u des Speicherelements 9a, 9b aktualisiert. Der durch die Module 23 bis 27 durchgeführte Algorithmus wird beschrieben durch die Formel

$$\left(h \circ m + \Delta Q_{ex} - u\Delta m\right) \cdot M^{-1} + u \rightarrow u \ . \qquad\qquad \text{GLG 2}$$

Aus dem Masseninhalt M wird durch Invertierung (Modul 25) und Multiplikation (Modul 28) mit dem Volumen V das spezifische Volumen $v_i$ (i=1,2) berechnet. Anstelle der spezifischen inneren Energie u kann alternativ durch die Speichereinheit 9a, 9b in einer nicht näher dargestellten Verfahrensvariante auch die absolute innere Energie $U = M \cdot u$ direkt berechnet werden. Die Änderung der absoluten inneren Energie pro Iterationsschritt ergibt sich aus der Summe $m \cdot h + \Delta Q_{ex}$.

Aus der inneren Energie u wird nach der Formel $h_i = u + p_i v_i$ durch ein Modul 29 die spezifische Enthalpie $h_i$ des jeweiligen Speicherelements 9a, 9b berechnet. Das durch ein Modul 30 gebildete Produkt pv aus Druck $p_i$ (i=1,2) und spezifischem Volumen $v_i$ wird hierzu durch ein der Auflösung einer algebraischen Schleife dienendes Verzögerungsmodul 31 aus dem vorangegangenem Simulationsschritt zurückbehalten und dem Modul 29 zur Verfügung gestellt. Ein dem Verzögerungsmodul 31 und dem Modul 29 zwischengeschaltetes Proportionalmodul 32 dient zur Umrechnung des Produkts pv in SI-Einheiten. Zur Berechnung des Drucks $p_i$ wird die durch das Modul 29 berechnete Enthalpie $h_i$ und das durch das Modul 28 berechnete spezifische Volumen $v_i$ einem Modul 33 zugeführt. Das Modul 33 ermittelt den Druck $p_i$ unter Rückgriff auf eine hinterlegte Wasserdampftafel W. Alternativ hierzu wäre auch denkbar, die Entahlpie $h_i$ als Funktion $h_i = hi(u_i, v_i)$ anhand der Wasserdampftafel direkt zu berechnen.

Der Druck $p_i$, das spezifische Volumen $v_i$ und die Enthalpie $h_i$ werden zu dem Zustandsvektor $Z_i$ des jeweiligen Speicherelements 9a, 9b zusammengefasst und über einen Datenausgang 34 ausgegeben.

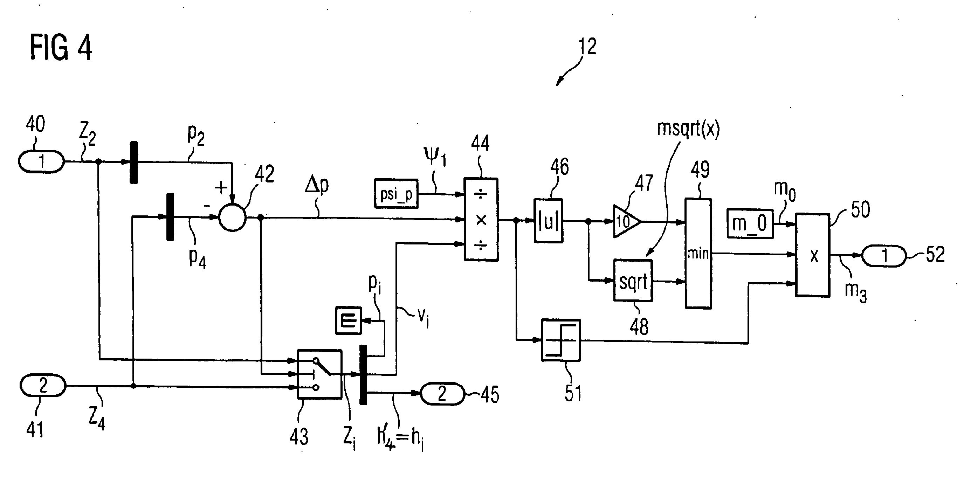

In FIG 4 ist die Struktur und Funktionsweise des die Rohrleitung 4 simulierenden Durchflussmoduls 12 dargestellt. Dem Durchflussmodul 12 wird über einen ersten Dateneingang 40 der von dem Speicherelement 9b ausgegebene Zustandsvektor $Z_2$ zugeführt. Über einen zweiten Dateneingang 41 wird dem Durchflussmodul 12 der von dem Endmodul 14 ausgegebene Zustandsvektor $Z_4$ zugeführt. Aus dem Zustandsvektor $Z_2$ und $Z_4$ werden die entsprechenden Drücke $p_2$ bzw. $p_4$ extrahiert und einem Modul 42 zugeführt, welches die Druckdifferenz $\Delta p$ ermittelt. Die Zustandsvektoren $Z_2$ und $Z_4$ werden weiterhin einem Schaltmodul 43 zugeführt, welches entsprechend dem Vorzeichen der Druckdifferenz $\Delta p$ alternativ den mit dem höheren Druck $p_i$ behafteten Zustand $Z_i$ (i=2,4) zuschaltet.

Infolge des Schaltmoduls 43 ist das Durchflussmodul 12 zur Simulation einer bidirektionalen Strömung durch die Rohrleitung 4 ausgebildet, bei welchem - analog zu der realen Rohrleitung 4 - die Strömungsrichtung des Arbeitsfluids F stets in Richtung der Druckgefälles gerichtet ist. In FIG 4 ist der Regelfall dargestellt, in welchem der Druck $p_2$ in dem Referenzvolumen 8b den Druck $p_4$ in dem Endmodul 14 übersteigt und somit das Arbeitsfluid F von dem Referenzvolumen 8b in Richtung des Kondensators 6 strömt.

Der von dem Schaltmodul 43 ausgegebene Zustandsvektor $Z_i$ (gemäß FIG 4: i=2) wird komponentenweise aufgegliedert. Hierbei wird das spezifische Volumen $v_i$ einem Modul 44 zugeführt. Die Enthalpie $h_i$ wird über einen Datenausgang 45 als Enthalpie $h'_4$ ausgegeben.

Durch das Modul 44 wird die Druckdifferenz $\Delta p$ durch das spezifische Volumen $v_i$ und eine als Auslegungs-durchfluss $\Psi_1$ bezeichnete, für das Durchflussmodul 12 spezifische Konstante dividiert. $\Psi_1$ ist hierbei abhängig von dem Auslegungszustand. Von dem Ergebnis wird der Absolutwert (Modul 46) und die Quadratwurzel (Module 47,48 und 49) gebildet. Die Module 47 bis 49 stellen hierbei eine numerisch stabilisierte Wurzelfunktion msqrt(x) zur Verfügung, die in TAB 2 näher definiert ist.

Das Ergebnis wird durch ein Modul 50 mit einer als Auslegungsmassenstrom $m_0$ bezeichneten Konstante und dem von einem Modul 51 zur Verfügung gestellten Vorzeichen der Druckdifferenz $\Delta p$ zur Ermittlung des Massenstroms $m_3$ multipliziert. Der Massenstrom $m_3$ wird über einen Datenausgang 52 ausgegeben.

Der durch die Durchflussgleichung 12 ausgeführte Algorithmus ist somit äquivalent zur der Formel

$$m_3 = m_0 \cdot sign\left(\frac{p_2 - p_1}{\psi_1 \cdot v_j}\right) \cdot msqrt\left(\left|\frac{p_2 - p_1}{\psi_1 \cdot v_j}\right|\right) \qquad \text{GLG 3}$$

mit j=2, wenn $p_2 > p_1$, sonst j=1.

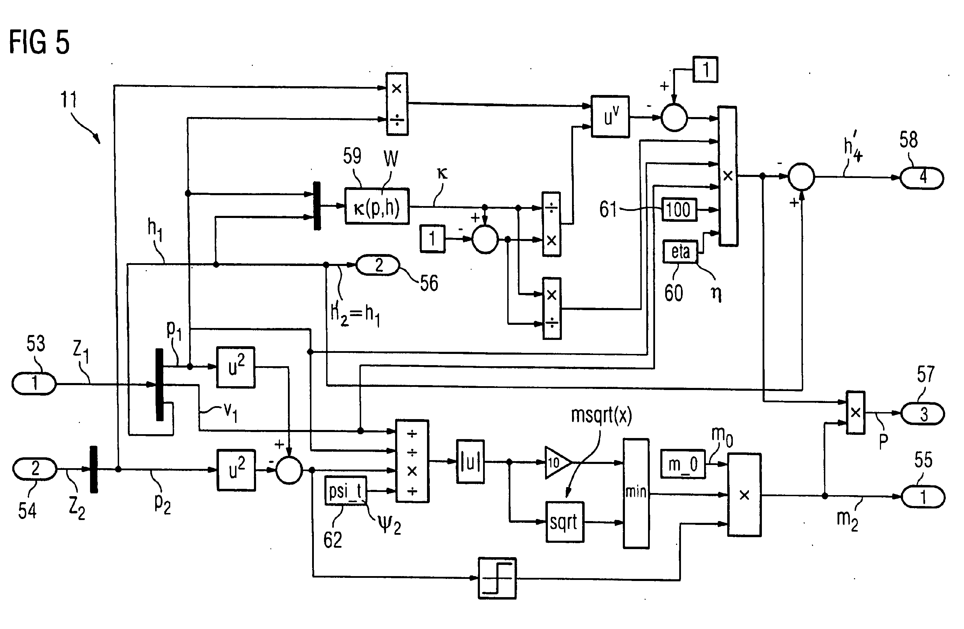

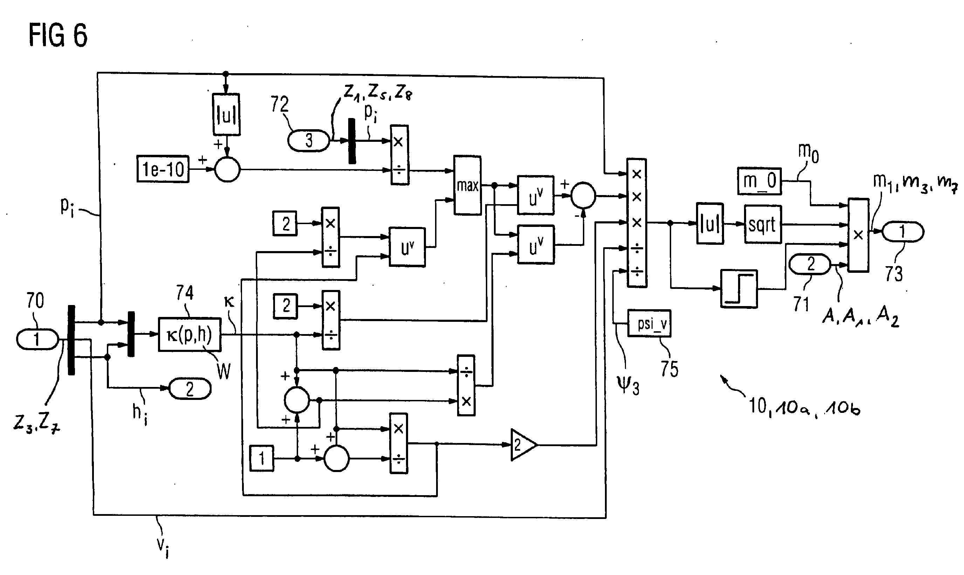

In analoger Weise sind in den FIG 5 und 6 die Struktur und Funktionsweise der Durchflussmodule 11 bzw. 10 dargestellt, die den Fluss durch den Turbinenabschnitt 3 bzw. den Fluss durch das Ventil 2 simulieren.

Dem Durchflussmodul 11 sind über Dateneingänge 53 und 54 die Zustandsvektoren $Z_1$ bzw. $Z_2$ zugeführt. Das Durchflussmodul 11 gibt über einen ersten Datenausgang 55 den Massenstrom $m_2$ aus. Über einen zweiten Datenausgang 56 wird die Enthalpie $h'_2$ ausgegeben, deren Wert - wie vorstehend bereits ausgeführt - der Enthalpie $h_1$ des Zustandsvektors $Z_1$ entspricht. Über einen dritten Datenausgang 57 gibt das Durchflussmodul 11 die Turbinenleistung P aus. Über einen vierten Datenausgang 58 wird die von dem Durchflussmodul 11 berechnete Enthalpie $h'_3$ ausgegeben. Die Berechnung der Enthalpie $h'_3$ folgt hierbei approximativ nach der in FIG 5 symbolisch dargestellten Formel

$$h'_3 = h_1 - 100 \cdot p_1 \cdot v_1 \cdot \eta \cdot \left[1 - \left(\frac{p_2}{p_1}\right)^{(\kappa-1)/\kappa}\right] \cdot \frac{\kappa}{\kappa - 1} \qquad \text{GLG 4}$$

Hierbei wird der Isentropenexponent $\kappa$ von Wasserdampf durch ein Modul 59 unter Heranziehung der hinterlegten Wasserdampftafel W in Abhängigkeit des Drucks $p_1$ und der Enthalpie $h_1$ berechnet. Der in GLG 4 eingehende isentrope Wirkungsgrad $\eta$ der Turbine wird durch ein Modul 60 als Konstante zur Verfügung gestellt. Eine weitere, durch ein Modul 61 zur Verfügung gestellte Konstante des Werts 100 dient wiederum zur Umrechnung des zweiten Differenzterms in GLG 1 in SI-Einheiten.

Die Berechnung des Massenstroms $m_2$ erfolgt nach der in FIG 5 symbolisch dargestellten Formel

$$m_2 = m_0 \cdot sign\left(p_1{}^2 - p_2{}^2\right) \cdot msqrt\left(\left|\frac{p_1{}^2 - p_2{}^2}{v_1 \cdot p_1 \cdot \psi_2}\right|\right) \cdot \qquad \text{GLG 5}$$

Durch ein Modul 62 wird hierbei wiederum ein für das Durchflussmodul 11 und die Auslegungszustände spezifischer Auslegungsdurchfluss $\psi_2$ als Konstante zur Verfügung gestellt.

Die Berechnung der Turbinenleistung P erfolgt nach der in FIG 5 symbolisch dargestellten Formel

$$P = 100 \cdot m_2 \cdot p_1 \cdot v_1 \cdot \eta \cdot \left[1 - \left(\frac{p_2}{p_1}\right)^{(\kappa-1)/\kappa}\right] \cdot \frac{\kappa}{\kappa - 1} \qquad \text{GLG 6}$$

Der Massenstrom $m_2$ berechnet sich hierbei gemäß GLG 5.

Dem in FIG 6 dargestellten Durchflussmodul 10 wird über einen Dateneingang 70 der Zustandsvektor $Z_3$ zugeführt. Über einen zweiten Dateneingang 71 erhält das Durchflussmodul 10 die Steuergröße A. Über einen dritten Dateneingang 73 ist der Zustandsvektor $Z_1$ zugeführt.

Das Durchflussmodul 10 gibt den berechneten Massenstrom $m_1$ über einen ersten Datenausgang 73 aus. Die Berechnung des Massenstromes $m_1$ erfolgt hierbei nach der in FIG 6 symbolisch dargestellten Formel

$$m_1 = m_0 \cdot A \cdot sign(Y) \cdot sqrt(|Y|) \quad , \quad \text{mit} \qquad \text{GLG 7}$$

$$Y = \frac{2 \cdot p_3 \cdot \left((X)^{2/\kappa} - (X)^{(\kappa+1)/\kappa}\right)}{v_3 \cdot \psi_3} \cdot \frac{\kappa}{\kappa - 1}$$

$$X = \max\left(\frac{p_1}{|p_3| + 10^{-10}} ; \frac{2}{\kappa + 1}^{\kappa/(\kappa-1)}\right) \cdot$$

Die hierin enthaltene Isentropenexponent $\kappa$ wird durch ein Modul 74 wiederum anhand der Wasserdampftafel W in Abhängigkeit des Drucks $p_3$ und der Enthalpie $h_3$ ermittelt. In GLG 7 geht wiederum ein für das Durchflussmodul 10 und den Auslegungszustände spezifischer Auslegungsdurchfluss $\psi_3$ als Konstante ein, der durch ein Modul 75 bereitgestellt wird.

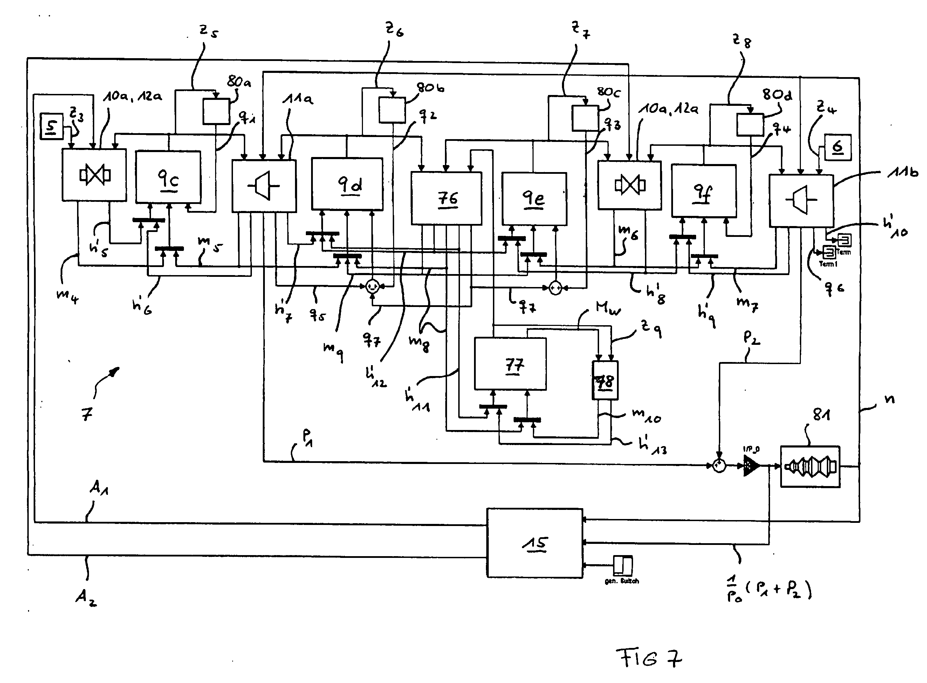

FIG 7 zeigt ein gegenüber FIG 2 modifiziertes Ausführungsbeispiel des Simulationsmodells 7. In dieser Ausführung dient das Simulationsmodell 7 zur Simulation einer (nicht näher dargestellten) Dampfturbinenanlage mit - sukzessive hintereinandergeschaltet - einem ersten Ventil, einem ersten Turbinenabschnitt, einem Wasserabscheider, einem zweiten Ventil und einem zweiten Turbinenabschnitt. Optional wird anstelle eines oder beider Ventile oder in Serie mit diesen auch eine Rohrleitung in dem Simulationsmodell 7 berücksichtigt.

Im Rahmen des Simulationsmodells 7 gemäß FIG 7 entspricht dem ersten und zweiten Ventil ein Durchflussmodul 10a bzw. 10b, dem ersten und zweiten Turbinenabschnitt ein Durchflussmodul 11a bzw. 11b, den optional vorgesehenen Rohrleitungen entspricht jeweils ein Durchflussmodul 12a bzw. 12b. Dem Wasserabscheider entspricht im Rahmen des Simulationsmodells 7 ein Durchflussmodul 76.

Den Durchflussmodulen 10a, 10b, 11a, 11b, 12a, 12b sowie 76 ist jeweils ein Speicherelement 9c, 9d, 9e bzw. 9f zwischengeschaltet.

Das dem Wasserabscheider zugeordnete Durchflussmodul 76 kommuniziert weiterhin mit einem Wasserspeicherelement 77, dem wiederum ein Füllstandmodul 78 zugeordnet ist.

Die Durchflussmodule 10a, 10b, 11a, 11b, 12a, 12b, 76 und Speicherelemente 9c-9f kommunizieren im Zuge der Simulation grundsätzlich in der im Zusammenhang mit FIG 2 beschriebenen Weise.

Abweichend davon gibt jedes Speicherelement 9c-9f einen Zustandvektor $Z_i$ (i = 5,6,7 bzw. 8) der Form $Z_i =$ $\{p_i, v_i, h_i, T_i\}$ aus, der neben den Größen Druck $p_i$, spezifisches Volumen $v_i$ und Enthalpie $h_i$ zusätzlich die Temperatur $T_i$ enthält. Ein weiterer Zustandvektor $Z_9$ desselben Formats wird von dem Wasserspeicherelement 77 ausgegeben. Ebenso sind im Rahmen des Simulationsmodells 7 gemäß FIG 7 die Randzustände $Z_3$ und $Z_4$ auf das Format $Z_i=\{p_i, v_i,h_i,T_i\}$ erweitert.

Im Unterschied zu FIG 2 werden weiterhin Wärmeströme $q_i$ (i = 1-7) berücksichtigt, die in Abhängigkeit der Temperatur oder anderer Prozessparameter den Energieinhalt der Speicherelemente 9c-9f zusätzlich beeinflussen. Die Wärmeflüsse $q_1$-$q_4$ werden den Speicherelementen 9c-9f von einem jeweils zugeordneten Verlustmodul 80a-80d zugeführt. Der jeweilige Wärmestrom $q_1$-$q_4$ wird hierbei von dem Verlustmodul 80c-80f in Abhängigkeit der Temperatur $T_5$-$T_8$ des jeweils zugeordneten Speicherelements 9c-9f bestimmt und simuliert so den temperaturabhängigen Wärmetransfer aus dem Speicherelement 9c-9f.

Die Wärmeströme $q_5$ und $q_6$ werden von den den Turbinenabschnitten zugeordneten Durchflussmodulen 11a bzw. 11b berechnet und simulieren die von den Turbinenabschnitten erzeugte Ventilationswärme. Der Wärmestrom $q_5$ wird als Eingangsgröße dem nachgeschalteten Speicherelement 9d zugeführt, der Wärmestrom $q_6$ (mangels nachgeschaltetem Speicherelement) einem Ausgabemodul 79.

Der Wärmestrom $q_7$ wird von dem dem Wasserabscheider zugeordneten Durchflussmodul 76 in Abhängigkeit der Temperaturdifferenz der angrenzenden Speicherelemente 9d und 9e berechnet und an diese Speicherelemente 9d,9e als Eingangsgröße zugeführt, um einen Energiefluss zwischen diesen Speicherelementen 9d,9e zu simulieren.

Gegenüber FIG 2 ist gemäß FIG 7 weiterhin zusätzlich ein Turbinenwellenmodul 81 vorgesehen, dem die von den Durchflussmodulen 11a, 11b jeweils berechnete Turbinenleistung $P_1$ bzw. $P_2$ zugeführt ist. Das Turbinenwellenmodul 81 berechnet aus der Turbinenleistung unter Berücksichtigung einer vorgegebenen Trägheit (sowie optional der Reibungswiderstände) der Turbinen eine Drehzahl n der Turbinenwelle und gibt diese Drehzahl n als Eingangsgröße zur Berechnung der Ventilationswärme an die Durchflussmodule 11a, 11b zurück.

Die Drehzahl n wird weiter zusammen mit der (summierten und normierten) Turbinenleistung $P_1,P_2$ dem Steuermodul 15 zugeführt, das in der Ausführung gemäß FIG 7 die Durchflussmodule 10a,10b nach Maßgabe der Turbinenleistung $P_1,P_2$ und der Drehzahl n durch Regelung der jeweils zugeordneten Steuergröße $A_1$, $A_2$ ansteuert.

Die Durchflussmodule 10a (bzw. 12a), 11a, 10b (bzw. 12b) und 11b geben jeweils einen Massenstrom $m_i$ (mit i = 4-7) sowie Enthalpien $h'_i$ (mit i = 5-10) aus. Das dem Wasserabscheider entsprechende Durchflussmodul 76 berechnet - abweichend von den übrigen Durchflussmodulen 10a,10b,11a,11b,12a,12b - zwei Massenströme $m_8$ und $m_9$, die einem nassen (d.h. im Wesentlichen wasserhaltigen) Massenanteil bzw. einem trockenen (d.h. im Wesentlichen gashaltigen) Massenanteil des Förderfluids F entsprechen. Das Durchflussmodul 76 berechnet weiterhin die diesen Massenströmen entsprechenden Enthalpien $h'_{11}$ und $h'_{12}$. Der "trockene" Massenstrom $m_9$ und die zugehörige Enthalpie $h'_{12}$ werden den angrenzenden Speicherelementen 9d und 9e als Eingangsgröße zugeführt. Der "nasse" Massenstrom $m_8$ und die zugehörige Enthalpie $h'_{11}$ werden dem vorgeschalteten Speicherelement 9d und dem Wasserspeicherelement 77 als Eingangsgröße zugeführt. Das Wasserspeicherelement 77 gibt seinerseits den Zustandsvektor $Z_9$ als Eingangsgröße an das Durchflussmodul 76 zurück. Das Wasserspeicherelement 77 gibt weiterhin einen Wasseranteil $M_w$ seiner Gesamtmasse als Eingangsgröße an das Füllstandmodul 78 ab.

Das Füllstandmodul 78 simuliert einen Überlauf des Wasserspeichers und reduziert die in dem Wasserspeicherelement 77 enthaltene Masse, wenn diese eine vorgegebene Schwelle (entsprechend einem Maximalfüllstand des Wasserspeichers) überschreitet.

Die datenmäßige Vernetzung der Durchflussmodule 10a,10b,11a, 11b,12a,12b und 76, der Speicherelemente 9c-9f und 77, des Füllstandmoduls 78 und des Turbinenwellenmoduls 81 ist im Übrigen FIG 7 zu entnehmen.

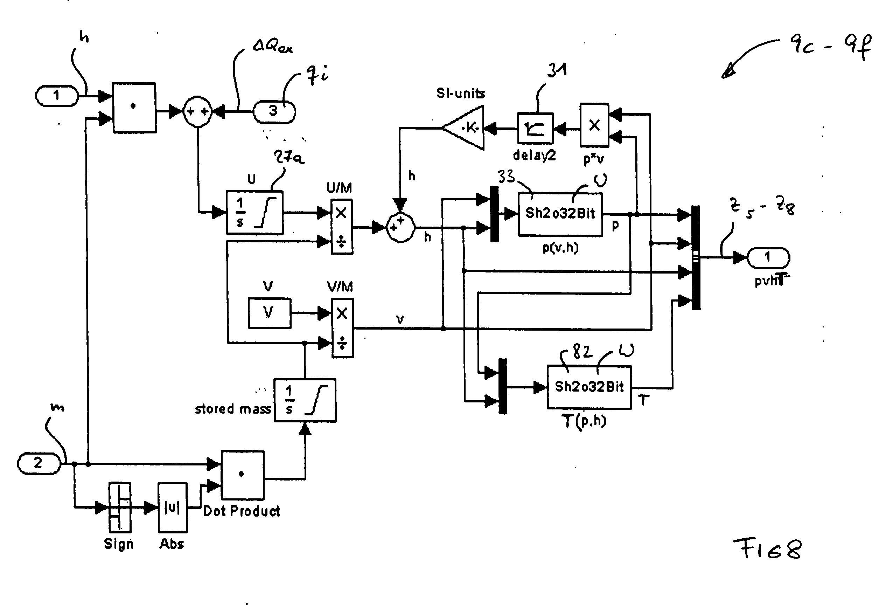

Die in FIG 8 näher dargestellten Speicherelemente 9c-9f entsprechen hinsichtlich Aufbau und Funktion im Wesentlichen den im Zusammenhang mit FIG 3 beschriebenen Speicherelementen 9a, 9b. Die Zusammensetzung des Enthalpievektors h und Massenvektors m für die einzelnen Speicherelemente 9c-9f ist FIG 7 zu entnehmen.

Im Unterschied zu FIG 3 wird aber der Wärmestrom $\Delta Q_{ex}$ als variable Summe der dem jeweiligen Speichermodul 9c-9f gemäß FIG 7 zugeführten Wärmeströme $q_i$ zugeführt. Weiterhin wird für den ausgegebenen Zustandsvektor $Z_5$-$Z_8$ zusätzlich die Temperatur $T_i$ mittels eines Moduls 82 berechnet, in welchem die Funktion $T_i(vi,hi)$ unter Rückgriff auf die Dampftafel W implementiert ist.

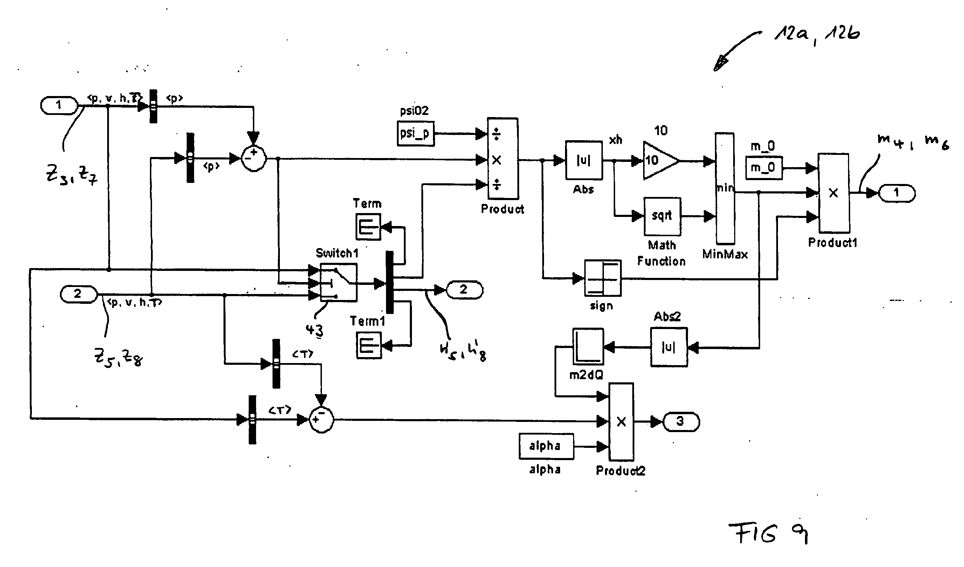

In FIG 9 ist der Aufbau der Rohrleitungs-Durchflussmodule 12a, 12b näher dargestellt. Die Durchflussmodule 12a, 12b entsprechen in Aufbau und Funktion im Wesentlichen dem im Zusammenhang mit FIG 4 beschriebenen Durchflussmodul 12. Im Unterschied zu dort wird durch die Durchflussmodule 12a, 12b zusätzlich in Abhängigkeit der Temperaturdifferenz der als Eingangsgrößen zugeführten Zustandsvektoren $Z_i$ ein Wärmestrom dQ berechnet und ausgegeben. "alpha" bezeichnet hierbei einen als Konstante vorgegebenen Wärmeaustauschkoeffizienten, "m2dQ" eine vorgegebene Kennlinie, die einen massenstromabhängigen Wärmetransferfaktor ausgibt.

Die Ventil-Durchflussmodule 10a, 10b entsprechen in Aufbau und Funktion dem im Zusammenhang mit FIG 6 beschriebenen Durchflussmodul 10.

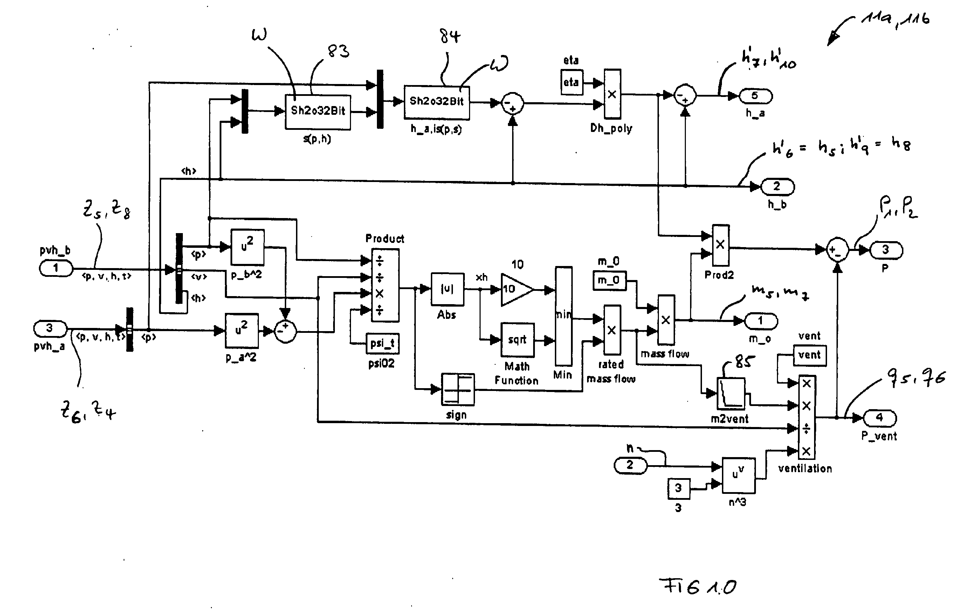

In FIG 10 ist der Aufbau der Turbinenabschnitt-Durchflussmodule 11a, 11b näher dargestellt. Die Durchflussmodule 11a, 11b entsprechen in Aufbau und Funktion teilweise dem im Zusammenhang mit FIG 5 beschriebenen Durchflussmodul 11. Abweichend von FIG 5 erfolgt hier die Berechnung der Ausgangsenthalpie $h'_7$ bzw. $h'_{10}$ unter Verwendung der Formel für die isentrope (bzw. polytrope) Entspannung,

$$h'_j = h_i - \eta \cdot [h_i - h(p_k, s(p_i, h_i))] \qquad \text{GLG} \quad 8$$

mit i = 5 bzw. 8; j = 7,10; k = 6,4, indem unter Rückgriff auf die Wasserdampftafel W zunächst die spezifische Entropie $s(p_i,h_i)$ (Modul 83) des Eingangszustands $Z_5$ bzw. $Z_8$, und anschließend die (isentrope) Enthalpie $h(p_k,s(p_i,h_i))$ des Ausgangszustands $Z_6$ bzw. $Z_4$ ermittelt werden.

Zusätzlich wird durch die Durchflussmodule 11a, 11b der durch Ventilation hervorgerufene Wärmestrom $q_5$ bzw. $q_6$ in Abhängigkeit der Drehzahl n und der spezifischen Dichte $v_i$ des Eingangszustands $Z_5$ bzw. $Z_8$ berechnet. "m2vent" (Modul 85) steht hierbei für eine kontinuierliche Stufenfunktion, die von 0 auf 1 ansteigt, wenn der Massenstrom $m_5,m_7$ eine vorgegebene Schwelle unterschreitet. Das Modul 85 schaltet somit quasi die Ventilationsleistung an, wenn der Massenfluss $m_5,m_7$ zum Erliegen kommt.

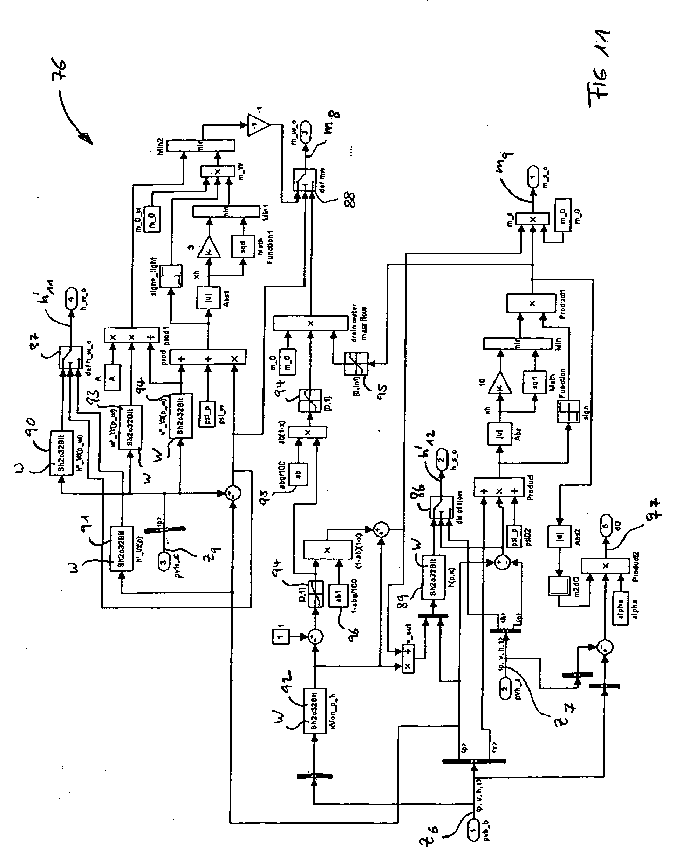

In FIG 11 ist der Aufbau des dem Wasserabscheider entsprechenden Durchflussmoduls 76 näher dargestellt. Das Durchflussmodul 76 stellt dem Grundprinzip nach eine sich verzweigende Rohrleitung dar. FIG 11 entspricht insofern teilweise der FIG 9.

Schaltmodule 86, 87 und 88 bewirken ein unterschiedliches Verhalten des Durchflussmoduls 76 in Abhängigkeit der Druckgradienten zwischen den angrenzenden Speicherelementen 9d, 9e und dem Wasserspeicherelement 77.

Das Schaltmodul 86 belegt in Abhängigkeit des Vorzeichens der Druckdifferenz $p_6$-$p_7$ der angrenzenden Speicherelemente 9d und 9e die ausgegebene Enthalpie $h'_6$ entweder mit der anhand der Wasserdampftafel W berechneten Enthalpie h(p,x) (Modul 89) des entwässerten Förderfluids F oder mit der Enthalpie $h_7$ des Ausgangszustands $Z_7$. Hierbei steht x für den zuvor berechneten Dampfgehalt x.

Das Schaltmodul 87 belegt in Abhängigkeit der Druckdifferenz $p_9$-$p_6$ zwischen dem Wasserspeicherelement 77 und dem Speicherelement 9d die ausgegebene Enthalpie $h'_{12}$ entweder mit der anhand der Wasserdampftafel W berechneten Enthalpie von Dampf bei dem im Wasserspeicherelement 77 herrschenden Druck (Modul 90) oder mit der anhand der Wasserdampftafel W berechneten Enthalpie von Wasser bei dem in dem vorgeschalteten Speicherelement 9d herrschenden Druck (Modul 91).

Das Schaltmodul 88 bestimmt in Abhängigkeit der Druckdifferenz $p_9$-$p_6$ zwischen dem Wasserspeicherelement 77 und dem Speicherelement 9d den Betrag und die Flussrichtung des Massenstroms $m_8$. Insbesondere wird durch das Schaltmodul 88 und die durch dieses alternativ zuschaltbaren Terme berücksichtigt, dass je nach den herrschenden Druckverhältnissen entweder Wasser aus dem Förderfluid F kondensiert und dem Wasserspeicherelement 77 zugeführt wird oder dass das in dem Wasserspeicherelement 77 gespeicherte Wasser teilweise wieder in das Förderfluid F ausdampft.

Im Einzelnen werden ferner gemäß FIG 11 durch ein Modul 92 der Dampfgehalt x als Funktion x(p,h), durch ein Modul 93 die Schallgeschwindigkeit in Wasser bei dem im Wasserspeicherelement 77 herrschenden Druck sowie durch ein Modul 94 das spezifische Volumen von Wasser bei dem im Wasserspeicherelement 77 herrschenden Druck anhand der Wasserdampftafel W bestimmt. Module 94 und 95 begrenzen die jeweilige Eingangsgröße auf ein Intervall [0,1] bzw. [0,inf), wobei "inf" für positiv unendlich steht.

In FIG 11 steht die Größen "ab" (Modul 95) für einen vorgegeben Abscheidegrad des Wasserabscheiders, angegeben als Zahl zwischen 0 und 1. Die Größe "ab1" (Modul 96) steht für die Differenz dieses Abscheidegrades von 1, d.h. 1 - ab.

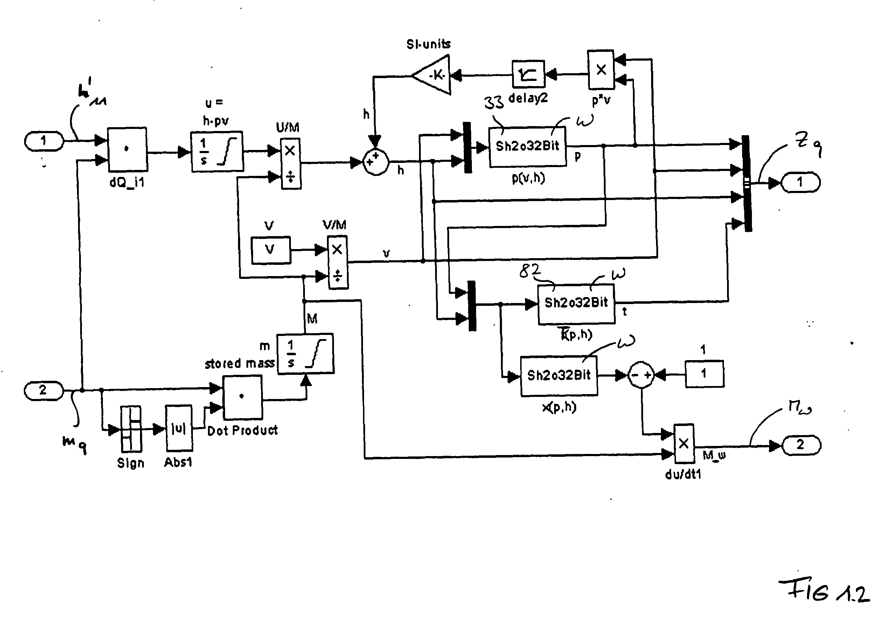

Das in FIG 12 näher dargestellte Wasserspeicherelement 77 gleicht hinsichtlich Aufbau und Funktionsweise im Wesentlichen den Speicherelementen 9a-9f (FIG 3 bzw. 8). Das Wasserspeicherelement 77 repräsentiert aber - anders als die gewöhnlichen Speicherelemente 9a-9f ein Referenzvolumen der Dampfturbinenanlage 1, in dem kondensiertes Wasser neben einer Wasserdampfphase enthalten ist. Abweichend von den gewöhnlichen Speicherelementen 9a-9f wird daher durch ein Modul "x(p,h)" unter Rückgriff auf die Wasserdampftafel W anhand des Dampfgehalts x der Wasseranteil $M_w$ an der in dem Wasserspeicherelement 77 enthaltenen Gesamtmasse berechnet und ausgegeben.

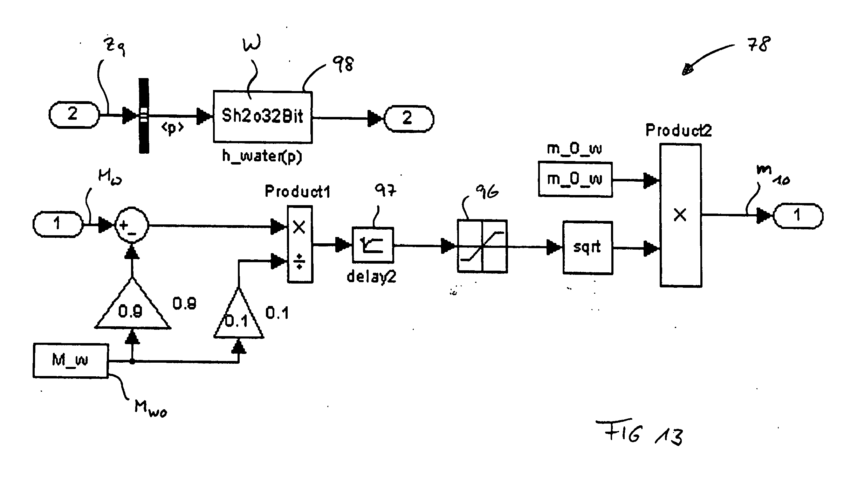

Das in FIG 13 näher dargestellte Füllstandsmodul 78 erzeugt in Simulation eines Überlaufes für das Wasserspeicherelement 77 einen Massenstrom mg, der Masse aus dem Wasserspeicherelement 77 entfernt, wenn der Wasseranteil $M_w$ 90% einer vorgegebenen Schwelle $M_{w0}$ übersteigt, d.h. wenn der Wasserspiegel im Wasserspeicher über einen Maximalfüllstand hinaus anwächst. Ein Modul 96 bewirkt hierbei eine Begrenzung seines Eingangswerts ($M_w$ - 0,9 $M_{w0}$) / (0,1 $M_{w0}$) auf nicht-negative Werte, d.h. ein Intervall [0,inf). Ein Modul 97 bewirkt eine Verzögerung des Berechnungsvorgangs um einen Iterationsschritt.

Das Füllstandsmodul bestimmt weiterhin anhand der Wasserdampftafel W in Abhängigkeit des Drucks $p_9$ im Wasserspeicher 77 die Enthalpie $h'_{13}$ des abgeführten Wassers (Modul 98).

TAB 1: Verwendete Symbole

| Symbol | Beschreibung | Beispiel | Formeläquivalent |
|---|---|---|---|
| (i) → x | Dateneingang Nr. i für Variable x | | |
| x → (i) | Datenausgang Nr. i für Variable x | | |
| [...] → x | Erzeugung einer Konstante x | [1] → x  [eta] → x | x → 1 (direkte Wertzuweisung)  x → eta (Verweis auf hinterlegte Konstante) |
| x → [f] → y  x1,x2 → [f] → y | Mathematische Funktion y = f(x) bzw. y = f(x1, x2, ...) | x → [sqrt] → y  x1,x2 → [u^v] → y  x → [⌐] → y | $y = sqrt(x) = x^{1/2}$  $y = (x1)^{x2}$  $y = sign(x)$ |
| x1, x2 → (+) → y | Addition, Subtraktion | x1, x2 → (+) → y  x1, x2 → (-/+) → y | $y = x1 + x2$  $y = x2 - x1$ |
| x1, x2 → [×/÷] → y | Multiplikation, Division | x1, x2 → [×/×] → y  x1, x2 → [×/÷] → y | $y = x1 \cdot x2$  $y = x1 / x2$ |
| x → [> p >] → y | Proportionalmodu 1, y = p · x | x → [> 2 >] → y | $y = 2x$ |

(fortgesetzt)

| Symbol | Beschreibung | Beispiel | Formeläquivalent |
|---|---|---|---|
| x1 → ‖ → v, x2 → | Vektorisierung, x1, x2 → v = <xl,x2> | | |
| v → ‖ → x1, → x2 | Devektorisierung , v = <x1, x2> → x1, x2 | | |
| x → [ $1/s$ ∫ ] → y | Integrator, y + x → y | | |

TAB 2: Verwendete mathematische Funktionen

| Zeichen | Beschreibung | Formel |
|---|---|---|
| sqrt, sqrt (x) | Quadratwurzel | $x^{1/2}$ |
| max, max (x;y) | Maximalfunktion | X, wenn x > y<br>y sonst |
| min, min (x;y) | Minimalfunktion | X, wenn x < y<br>y sonst |
| msqrt, msqrt (x) | Modifizierte Quadratwurzel | min (sqrt (x) ; 10·x) |
| sign, sign (x) | Signum-Funktion | 1, wenn x > 0<br>0, wenn x = 0<br>-1 sonst |

**Patentansprüche**

1. Verfahren zur Simulation des Betriebsverhaltens einer Dampfturbinenanlage (1),

- bei welchem die Dampfturbinenanlage (1) in mindestens zwei Anlagenelemente (2,3,4) und mindestens ein Referenzvolumen (8a,8b) gegliedert wird, so dass zwei aneinander angrenzenden Anlagenelementen (2,3;3,4) mindestens ein Referenzvolumen (8a;8b) zwischengeschaltet ist,
- bei welchem jedem Referenzvolumen (8a,8b) ein Speicherelement (9a-9f,77) für Masse und Energie zugeordnet wird, das einen anhand eines vorgegebenen Sets thermodynamischer Größen ($p_i$, $v_i$,$h_i$, $T_i$;i=1-9) defi-nierten zeitabhängigen thermodynamischen Zustand ($Z_i$; i=1-9) aufweist,
- bei welchem dem oder jedem Anlagenelement (2,3,4) eine Durchflussfunktion (10,10a,10b,11,11a,11b,12,12a, 12b, 76) zur Ermittlung eines Massenstroms ($m_i$;i=1-10) und zur Ermittlung der Enthalpie ($h'_i$;i=1-13) am Ein- und Austritt des Anlagenelements (2,3,4) zugeordnet wird,

wobei im Zuge einer Simulationsphase für jedes Speicherelement (9a-9f,77) ausgehend von vorgegebenen Anfangsbedingungen anhand der Durchflussfunktionen (10,10a,10b,11,11a,11b,12,12a,12b,76) der Masseninhalt (M) und die innere Energie (u) ermittelt und hieraus ein Ausgabezustand berechnet wird.

2. Verfahren nach Anspruch 1,
**gekennzeichnet durch** mindestens eine eine Rohrleitung (4) als Anlagenelement simulierende Durchflussfunktion (12, 12a,12b).

3. Verfahren nach Anspruch 1 oder 2,
**gekennzeichnet durch** mindestens eine ein Ventil (2) als Anlagenelement simulierende Durchflussfunktion (10, 10a,10b).

4. Verfahren nach einem der Ansprüche 1 bis 3,
**gekennzeichnet durch** mindestens eine einen Turbinenabschnitt (3) als Anlagenelement simulierende Durchflussfunktion (11,11a,11b).

5. Verfahren nach einem der Ansprüche 1 bis 4,
   **dadurch gekennzeichnet, dass** der thermodynamische Zustand ($Z_i$;i=1,2) eines jeden Speicherelements (9a,9b) durch die Größen Druck ($p_i$), Enthalpie ($h_i$) und spezifisches Volumen ($v_i$) definiert wird.

6. Verfahren nach einem der Ansprüche 1 bis 4,
   **dadurch gekennzeichnet, dass** der thermodynamische Zustand ($Z_i$;i=5-9) eines jeden Speicherelements (9a,9b) durch die Größen Druck ($p_i$), Enthalpie ($h_i$), spezifisches Volumen ($v_i$) und Temperatur ($T_i$) definiert wird.

7. Verfahren nach Anspruch 6,
   **dadurch gekennzeichnet, dass** durch die Durchflussfunktion (76) mindestens eines Anlagenelements ein von der Temperaturdifferenz der benachbarten Speicherelemente (9d,9e) abhängiger Wärmestrom ($q_7$) berechnet wird, der bei der Berechnung der Zustände dieser Speicherelemente (9d,9e) zusätzlich berücksichtigt wird.

8. Verfahren nach Anspruch 6 oder 7,
   **dadurch gekennzeichnet, dass** bei der Berechnung des Zustands mindestens eines Speicherelements (9c-9f) ein von der Temperatur ($T_5$-$T_8$) dieses Speicherelements (9c-9f) abhängiger Wärmeverlustbetrag ($q_1$-$q_4$) berücksichtigt wird.

9. Verfahren nach einem der Ansprüche 6 bis 8,
   **gekennzeichnet durch** eine einen Wasserabscheider als Anlagenelement simulierende Durchflussfunktion (76).

10. Verfahren nach Anspruch 9,
    **dadurch gekennzeichnet, dass** der Wasserabscheider einem Turbinenabschnitt nachgeschaltet ist.

11. Verfahren nach Anspruch 9 oder 10,
    **gekennzeichnet durch** ein einen Wasserspeicher simulierendes Wasserspeicherelement (77).

12. Verfahren nach einem der Ansprüche 4 bis 11,
    **gekennzeichnet durch** ein Turbinenwellenmodul (81), das anhand einer **durch** die Durchflussfunktion (11a,11b) des oder jedes Turbinenabschnitts berechnete Turbinenleistung ($P_1$,$P_2$) eine Drehzahl (n) bestimmt, wobei die Drehzahl (n) **durch** die Durchflussfunktion (11a,11b) zur Berechnung einer Ventilationswärme ($q_5$, $q_6$) berücksichtigt wird.

13. Verfahren nach Anspruch 12,
    **dadurch gekennzeichnet, dass** das Turbinenwellenmodul (81) den zeitlichen Verlauf der Turbinenleistung ($P_1$, $P_2$) des oder jeden Turbinenabschnitts berücksichtigt.

14. Verfahren nach einem der Ansprüche 1 bis 13,
    **dadurch gekennzeichnet, dass** der Ausgabezustand eines jeden Speicherelements (9a,9b) unter Heranziehung einer Wasserdampftafel (W) berechnet wird.

15. Verfahren nach einem der Ansprüche 1 bis 14,
    **dadurch gekennzeichnet, dass** die Simulationsphase mehrere iterativ nacheinander ausgeführte Simulationsschritte umfasst, wobei die für die Speicherelemente (9a-9f) berechneten Ausgabezustände eines zeitlich vorangehenden Simulationsschrittes als Anfangsbedingungen eines zeitlich nachfolgenden Simulationsschrittes herangezogen werden.

**Claims**

1. Method for simulating the operational performance of a steam turbine plant (1),

   - in which the steam turbine plant (1) is divided into at least two plant elements (2, 3, 4) and at least one reference volume (8a, 8b) such that at least one reference volume (8a; 8b) is interposed between two mutually adjacent plant elements (2, 3; 3, 4),
   - in which each reference volume (8a, 8b) is assigned a storage element (9a-9f, 77) for mass and energy which has a time-dependent thermodynamic state ($Z_i$; i = 1-9) defined with the aid of a prescribed set of thermodynamic variables ($p_i$, $v_i$, $h_i$, $T_i$; i = 1-9), and
- in which the or each plant element (2, 3, 4) is assigned a flow function (10, 10a, 10b, 11, 11a, 11b, 12, 12a, 12b, 76) for determining a mass flow ($m_i$; i = 1-10) and for determining the enthalpy ($h'_i$; i = 1-13) at the inlet and outlet of the plant element (2, 3, 4),

the mass content (M) and the internal energy (u) being determined starting from prescribed initial conditions with the aid of the flow functions (10, 10a, 10b, 11, 11a, 11b, 12, 12a, 12b, 76) in the course of a simulation phase for each storage element (9a-9f, 77), and an output state being calculated therefrom.

2. Method according to Claim 1, **characterized by** at least one flow function (12, 12a, 12b) simulating a pipeline (4) as plant element.

3. Method according to Claim 1 or 2, **characterized by** at least one flow function (10, 10a, 10b) simulating a valve (2) as plant element.

4. Method according to one of Claims 1 to 3, **characterized by** at least one flow function (11, 11a, 11b) simulating a turbine section (3) as plant element.

5. Method according to one of Claims 1 to 4, **characterized in that** the thermodynamic state ($Z_i$; i = 1,2) of each storage element (9a, 9b) is defined by the variables of pressure ($p_i$), enthalpy ($h_i$) and specific volume ($v_i$).

6. Method according to one of Claims 1 to 4, **characterized in that** the thermodynamic state ($Z_i$; i = 5-9) of each storage element (9a, 9b) is defined by the variables of pressure ($p_i$), enthalpy ($h_i$), specific volume ($v_i$) and temperature ($T_i$).

7. Method according to Claim 6, **characterized in that** the flow function (76) of at least one plant element is used to calculate a heat flow ($q_7$) which is dependent on the temperature difference of the neighbouring storage elements (9d, 9e) and is additionally taken into account in the calculation of the states of these storage elements (9d, 9e).

8. Method according to Claim 6 or 7, **characterized in that** in the calculation of the state of at least one storage element (9c-9f) account is taken of a heat loss amount ($q_1$-$q_4$) dependent on the temperature ($T_5$-$T_8$) of this storage element (9c-9f).

9. Method according to one of Claims 6 to 8, **characterized by** a flow function (76) simulating a water separator as plant element.

10. Method according to Claim 9, **characterized in that** the water separator is connected downstream of a turbine section.

11. Method according to Claim 9 or 10, **characterized by** a water storage element (77) simulating a water storage tank.

12. Method according to one of Claims 4 to 11, **characterized by** a turbine shaft module (81) which determines a speed (n) with the aid of a turbine output ($P_1$, $P_2$) calculated by the flow function (11a, 11b) of the or each turbine section, the speed (n) being taken into account by the flow function (11a, 11b) in order to calculate a ventilation heat ($q_5$, $q_6$).

13. Method according to Claim 12, **characterized in that** the turbine shaft module (81) takes into account the time profile of the turbine output ($P_1$, $P_2$) of the or each turbine section.

14. Method according to one of Claims 1 to 13, **characterized in that** the output state of each storage element (9a, 9b) is calculated using a steam table (W).

15. Method according to one of Claims 1 to 14, **characterized in that** the simulation phase comprises a plurality of simulation steps executed sequentially by iteration, the output states calculated for the storage elements (9a-9f) of a temporarally preceding simulation step being used as initial conditions of a temporarally following simulation step.

**Revendications**

1. Procédé de simulation des caractéristiques de fonctionnement d'une installation ( 1 ) de turbine à vapeur,

   - dans lequel on subdivise l'installation ( 1 ) de turbine à vapeur en au moins deux éléments ( 2, 3, 4 ) d'installation et en au moins un volume ( 8a, 8b ) de référence, de manière à ce qu'au moins un volume ( 8a, 8b ) de référence soit interposé entre deux éléments ( 2, 3 ; 3, 4 ) d'installation voisins l'un de l'autre,
   - dans lequel on associe à chaque volume ( 8a, 8b ) de référence un élément ( 9a à 9f, 77 ) d'accumulation de masse et d'énergie, qui a un état ( $z_i$ ; i = 1 à 9 ) thermodynamique dépendant du temps et défini au moyen d'un jeu prescrit de grandeurs ( $p_i$, $v_i$, $h_i$, $T_i$ ; i = 1 à 9 ) thermodynamiques,
   - dans lequel on associe à l'élément ( 2, 3, 4 ) d'installation ou à chaque élément ( 2, 3, 4 ) d'installation une fonction ( 10, 10a, 10b, 11, 11a, 11b, 12, 12a, 12b, 76 ) de passage pour la détermination d'un courant émis ( $m_i$ ; i = 1 à 10 ) massique et pour la détermination de l'enthalpie ( $h'_i$ ; i = 1 à 13 ) à l'entrée et à la sortie de l'élément ( 2, 3, 4 ) d'installation,

   dans lequel, au cours d'une phase de simulation, on détermine, pour chaque élément ( 9a à 9f, 77 ) d'accumulation, à partir de conditions initiales prescrites au moyen des fonctions ( 10, 10a, 10b, 11, 11a, 11b, 12, 12a, 12b, 76 ) de passage, la teneur ( M ) massique et l'énergie ( u ) interne et on en calcule un état de sortie.

2. Procédé suivant la revendication 1,
   **caractérisé par** au moins une fonction ( 12, 12a, 12b ) de passage simulant une conduite ( 4 ) comme élément d'installation.

3. Procédé suivant la revendication 1 ou 2,
   **caractérisé par** au moins une fonction ( 10, 10a, 10b ) de passage simulant une vanne ( 2 ) comme élément d'installation.

4. Procédé suivant l'une des revendications 1 à 3,
   **caractérisé par** au moins une fonction ( 11, 11a, 11b ) de passage simulant une section ( 3 ) de turbine comme élément d'installation.

5. Procédé suivant l'une des revendications 1 à 4,
   **caractérisé en ce que** l' on définit l'état ( $z_i$ ; i = 1, 2 ) thermodynamique de chaque élément ( 9a, 9b ) d'accumulation par les grandeurs pression ( $p_i$ ), enthalpie ( $h_i$ ), et volume ( $v_i$ ) spécifique.

6. Procédé suivant l'une des revendications 1 à 4,
   **caractérisé en ce que** l'on définit l'état ( $z_i$ ; i = 5 à 9 ) thermodynamique de chaque élément ( 9a, 9b ) d'accumulation par les grandeurs pression ( $p_i$ ), enthalpie ( $h_i$ ), volume ( $v_i$ ) spécifique et température ( $T_i$ ).

7. Procédé suivant la revendication 6,
   **caractérisé en ce que** l'on calcule, par la fonction ( 76 ) de passage d'au moins un élément d'installation, un flux ( $q_7$ ) calorifique, qui dépend de la différence de température entre les éléments ( 9d, 9e ) d'accumulation voisins et qui est pris en compte supplémentairement lors du calcul des états de ces éléments ( 9d, 9e ) d'accumulation.

8. Procédé suivant la revendication 6 ou 7,
   **caractérisé en ce que**, lors du calcul de l'état d'au moins un élément ( 9c à 9f ) d'accumulation, l'on tient compte d'un montant ( $q_1$ à $q_4$ ) de perte de chaleur, qui dépend de la température ( $T_5$ à $T_8$ ) de cet élément ( 9c à 9f ) d'accumulation.

9. Procédé suivant l'une des revendications 6 à 8,
   **caractérisé par** une fonction ( 76 ) de passage simulant un séparateur d'eau comme élément d'installation.

10. Procédé suivant la revendication 9,
    **caractérisé en ce que** le séparateur d'eau est monté en aval d'une section de turbine.

11. Procédé suivant la revendication 9 ou 10,
    **caractérisé par** un élément ( 77 ) d'accumulation d'eau simulant une accumulation d'eau.

**12.** Procédé suivant l'une des revendications 4 à 11,
**caractérisé par** module ( 81 ) d'arbre de turbine, qui détermine une vitesse ( n ) de rotation au moyen d'une puissance ( $P_1$, $P_2$ ) de turbine calculée par la fonction ( 11a, 11b ) de passage de la section de turbine ou de chaque section de turbine, la vitesse ( n ) de rotation étant prise en compte par la fonction ( 11a, 11b ) de passage pour le calcul d'une chaleur ( $q_5$, $q_6$ ) de ventilation.

**13.** Procédé suivant la revendication 12,
**caractérisé en ce que** le module ( 81 ) d'arbre de turbine tient compte de la variation dans le temps de la puissance ( $P_1$, $P_2$ ) de la turbine de la section de turbine ou de chaque section de la turbine.

**14.** Procédé suivant l'une des revendications 1 à 13,
**caractérisé en ce que** l'on calcule l'état de sortie de chaque élément ( 9a, 9b ) d'accumulation en mettant à profit une table ( W ) de vapeur d'eau.

**15.** Procédé suivant l'une des revendications 11 à 14,
**caractérisé en ce que** la phase de simulation comprend plusieurs stades de simulation exécutés itérativement les uns après les autres, les états de sortie calculés pour les éléments ( 9a à 9f ) d'accumulation d'un stade de simulation précédent dans le temps étant pris comme conditions initiales d'un stade de simulation suivant dans le temps.

FIG 1

FIG 2

EP 1 647 677 B1

FIG 3

FIG 4

EP 1 647 677 B1

FIG 5

EP 1 647 677 B1

FIG 6

FIG 7

Fig 8

FIG 9

FIG 11

FIG 12

FIG 13

**EP 1 647 677 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2004073409 A1